# FASCICULE DE BREVET EUROPEEN

(11) **EP 4 445 555 B1**
(45) Date de publication et mention de la délivrance du brevet: **31.12.2025**
(21) Numéro de dépôt: 22822555.3
(22) Date de dépôt: 30.11.2022
(51) Int. Cl.: H04L 9/40, H04W 12/08

(54) **PROCÉDÉ DE CONTRÔLE D'ACCÈS À UNE ZONE À SÉCURISER ET PROCÉDÉ D'INITIALISATION ASSOCIÉ**
VERFAHREN ZUR ZUGANGSKONTROLLE ZU EINEM ZU SICHERNDEN BEREICH UND ZUGEHÖRIGES INITIALISIERUNGSVERFAHREN
METHOD FOR CONTROLLING ACCESS TO AN AREA TO BE SECURED, AND ASSOCIATED INITIALISATION METHOD

(30) Priorité: 10.12.2021 FR 2113335
(43) Date de publication de la demande: 16.10.2024
(73) Titulaire: Akidaia, 06200 Nice (FR)
(72) Inventeur: BABAY ROUIS, Ouajdi, 06800 Cagnes-sur-Mer (FR); LEDEDANTEC, Gaël, 06000 Nice (FR)
(74) Mandataire: Hautier IP
(86) Numéro de dépôt international: PCT/EP2022/083769
(87) Numéro de publication internationale: WO 2023/104598

(56) Documents cités:
- WO-A1-2017/180454
- CN-A- 110 163 998
- US-A1- 2003 093 695
- US-A1- 2013 212 248
- US-A1- 2020 100 108

## Description

### DOMAINE TECHNIQUE

La présente invention concerne le domaine des systèmes et procédés de contrôle d'accès à une zone d'un site par un utilisateur. Elle concerne également le procédé d'initialisation du procédé de contrôle d'accès concerné. Elle trouve pour application particulièrement avantageuse la sécurisation de l'accès à une zone d'un site par un utilisateur, potentiellement de façon entièrement automatique, y compris en mode hors-ligne.

### ETAT DE LA TECHNIQUE

Il existe de nombreux procédés et systèmes de contrôle d'accès à un site. Parmi les documents décrivant de tels procédés et systèmes, on peut par exemple citer les documents de brevet référencés CN 102663815 B et WO 2011/159921 A1.

Les procédés et systèmes de contrôle d'accès connus nécessitent souvent au moins l'un parmi :
- une connexion Internet ou longue distance,
- une centrale de contrôle d'accès en communication avec des contrôleurs d'accès dont elle est distante et
- la transmission de données personnelles de l'utilisateur, en particulier au contrôleur d'accès.

Un objet de la présente invention est de proposer un procédé de contrôle d'accès et un procédé d'initialisation associé qui permettent de pallier au moins un inconvénient des solutions existantes.

Un autre objet de la présente invention est de proposer un procédé de contrôle d'accès qui permet d'améliorer la sécurisation de l'accès à un site.

Un objet de la présente invention est plus particulièrement de proposer un procédé de contrôle d'accès qui ne nécessite pas, pour permettre la sécurisation de l'accès à un site :
- une connexion Internet ou longue distance et/ou
- une centrale de contrôle d'accès en communication avec des contrôleurs d'accès dont elle est distante et/ou
- la transmission de données personnelles de l'utilisateur.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation d'un premier aspect de l'invention, on prévoit un procédé d'initialisation d'un procédé de contrôle d'accès à une zone d'un site. Le site comprend au moins une zone et chaque zone est associée à un contrôleur d'accès à ladite zone. Le procédé d'initialisation comprend les étapes suivantes mises en œuvre par un serveur informatique :
a) générer, pour chaque contrôleur d'accès, une clé privée de chiffrement et une clé partagée de chiffrement, la clé privée de chiffrement (PK) et la clé partagée de chiffrement (SK) formant de préférence une paire de clés de chiffrement symétrique,
b) générer un numéro d'identification unique (IDA) de chaque contrôleur d'accès,
c) stocker, dans une base de données du serveur informatique :
   i. des données personnelles d'un utilisateur dont au moins des données d'établissement d'une communication (PN), telles qu'un numéro de téléphone, avec un dispositif de communication portable de l'utilisateur et
   ii. une date de fin de validité du droit d'accès, voire une date de début de validité du droit d'accès, et
d) transmettre, au dispositif de communication portable de l'utilisateur en fonction desdites données d'établissement d'une communication (PN), une requête en installation, sur le dispositif de communication portable, d'une application de contrôle d'accès pour la mise en œuvre du procédé de contrôle d'accès à une zone d'un site par un utilisateur,
e) ladite application de contrôle d'accès étant, une fois installée sur le dispositif de communication portable, configurée pour générer et stocker dans un support de mémorisation du dispositif de communication portable, une première clé aléatoire (MK), recevoir, depuis le dispositif de communication portable, au moins la première clé aléatoire (MK),
f) générer une clé de chiffrement (BMK) par chiffrement de la première clé aléatoire (MK) avec la clé privée de chiffrement (PK),
g) générer au moins un droit d'accès (ACCESS) de l'utilisateur à une zone du site, chaque droit d'accès (ACCESS) comprenant au moins :
   i. la clé de chiffrement (BMK),
   ii. la clé partagée de chiffrement (SK),
   iii. le numéro d'identification unique (IDA) de chaque contrôleur d'accès associé à une zone pour laquelle un droit d'accès de l'utilisateur est à générer et la date de fin de validité du droit d'accès, voire la date de début de validité du droit d'accès et
h) transmettre ledit au moins un droit d'accès (ACCESS) au dispositif de communication portable.

Notons ici que le stockage, dans la base de données du serveur informatique, des données personnelles de l'utilisateur et le stockage de la date de fin de validité du droit d'accès, voire de la date de début de validité droit d'accès, ne sont pas nécessairement réalisés de façon concomitante ou dans un ordre donné. Les données personnelles de l'utilisateur peuvent être stockées une fois, avec de potentielles mises à jour de ces données lorsque nécessaire, tandis que la date de fin de validité du droit d'accès, voire la date de début de validité du droit d'accès, peut être stockée à différentes reprises, par exemple pour reconduire une autorisation d'accès à une zone d'un site, sans que les données personnelles de l'utilisateur aient nécessairement changées.

Par mise en œuvre du procédé d'initialisation tel qu'introduit ci-dessus, le dispositif de communication portable a été initialisé de sorte à permettre la mise en œuvre subséquente d'un mode de réalisation introduit ci-dessous d'un procédé de contrôle d'accès selon le deuxième aspect de l'invention.

Avant d'introduire le deuxième aspect de l'invention, sont énoncées ci-après des caractéristiques optionnelles du premier aspect de l'invention qui peuvent éventuellement être utilisées en association ou alternativement.

De manière facultative, le procédé d'initialisation tel qu'introduit ci-dessus peut en outre présenter au moins l'une quelconque des caractéristiques suivantes qui peuvent être prises séparément ou en combinaison.

Selon un exemple, le procédé d'initialisation tel qu'introduit ci-dessus comprend en outre les étapes suivantes mises en œuvre par le serveur informatique :
i) transmettre, à chaque contrôleur d'accès, la clé privée de chiffrement (PK) et la clé partagée de chiffrement (SK) précédemment générées pour ledit contrôleur d'accès et
j) transmettre, à chaque contrôleur d'accès, le numéro d'identification (IDA) précédemment généré pour ledit contrôleur d'accès.

Ainsi, chaque contrôleur d'accès a été initialisé de sorte à permettre la mise en œuvre subséquente du mode de réalisation introduit ci-dessous du procédé de contrôle d'accès selon le deuxième aspect de l'invention.

Selon un autre exemple, le procédé d'initialisation selon le premier aspect de l'invention comprend en outre, suite à la transmission dudit au moins un droit d'accès (ACCESS) au dispositif de communication portable, la transmission, par le serveur informatique au dispositif de communication portable, de données de mise à jour de la date de fin de validité du droit d'accès, voire de la date de début de validité du droit d'accès.

Comme déjà énoncé plus haut, le procédé d'initialisation selon l'exemple précédent permet de mettre à jour la première initialisation du dispositif de communication portable, par exemples de sorte à rafraîchir ou reconduire le droit d'accès de l'utilisateur à une zone d'un site et/ou de sorte à initialiser un nouveau droit d'accès de l'utilisateur à une autre zone du site.

Selon un autre exemple, le procédé d'initialisation selon le premier aspect de l'invention comprend en outre les étapes suivantes mises en œuvre par le serveur informatique :
- stocker un identifiant du site (SID), et
- transmettre, à chaque contrôleur d'accès, l'identifiant du site.

Comme cela apparaîtra clairement lorsque nous introduirons le procédé de contrôle d'accès selon le deuxième aspect de l'invention, le niveau de sécurisation de l'accès à une zone d'un site peut ainsi être avantageusement augmenté.

Selon un autre exemple, la mise en œuvre des étapes i) et j) telles qu'introduites ci-dessus précède une installation dudit au moins un contrôleur d'accès sur la zone du site qui lui est associée.

L'initialisation de chaque contrôleur d'accès peut être réalisée une fois pour toutes, par exemple avant son installation sur le site à sécuriser. On comprend ainsi que chaque contrôleur d'accès ne nécessite pas de moyens de communication à longue portée. Par ailleurs, l'initialisation de chaque contrôleur d'accès peut être réalisée manuellement par un technicien du fournisseur de services, sans nécessiter de moyens de connexion informatique avec le serveur informatique. Chaque contrôleur d'accès peut ainsi être avantageusement exempt de tout autre moyen de communication que ceux nécessaires à une communication à courte portée avec le dispositif de communication portable. Chaque contrôleur d'accès peut ainsi présenter un coût avantageusement limité.

Selon un autre exemple, le procédé d'initialisation selon le premier aspect de l'invention comprend en outre l'étape suivante mise en œuvre par le serveur informatique :
- générer, un code d'authentification (PIN) du dispositif de communication portable et
- transmettre, au dispositif de communication portable de l'utilisateur en fonction desdites données d'établissement d'une communication (PN), le code d'authentification (PIN), ce dernier étant à renseigner dans ladite application de contrôle d'accès, une fois celle-ci installée sur le dispositif de communication portable, pour authentifier le dispositif de communication portable.

Le procédé d'initialisation selon l'exemple précédent permet de sécuriser l'initialisation du dispositif de communication portable par le serveur informatique. En effet, selon l'exemple précédent, l'étape e) du procédé d'initialisation tel qu'introduit ci-dessus est implémentée après que le dispositif de communication portable ait été authentifié. Plus particulièrement, le code d'authentification peut consister en ou comprendre un code PIN.

En alternative ou en complément, le procédé d'initialisation selon l'exemple précédent peut comprendre en outre l'étape suivante mise en œuvre par le serveur informatique :
- transmettre, au dispositif de communication portable de l'utilisateur en fonction desdites données d'établissement d'une communication (PN), une durée de validité, ou équivalemment une date d'expiration, associée à chaque code d'authentification (PIN) transmis.

Selon un autre exemple, chaque droit d'accès (ACCESS) comprend en outre au moins l'un parmi un identifiant du site (SID) et un identifiant de l'utilisateur (UID).

Selon un autre exemple, chaque droit d'accès (ACCESS) est exempt de l'un au moins parmi la clé privée de chiffrement (PK) dudit au moins un contrôleur d'accès et la première clé aléatoire (MK) du dispositif de communication portable.

Comme mentionné ci-dessus, le deuxième aspect de l'invention concerne un procédé de contrôle d'accès à une zone d'un site par un utilisateur. Le site comprend au moins une zone et chaque zone du site est associée à un contrôleur d'accès à ladite zone.

L'utilisateur porte un dispositif de communication portable sur lequel une application de contrôle d'accès dédiée à la mise en œuvre du procédé de contrôle d'accès a été installée.

Chaque contrôleur d'accès stocke au moins une clé privée de chiffrement (PK), une clé partagée de chiffrement (SK) et un numéro d'identification (IDA) du contrôleur d'accès. La clé privée de chiffrement (PK) et la clé partagée de chiffrement (SK) forment de préférence une paire de clés de chiffrement symétrique.

Le dispositif de communication portable stocke une première clé aléatoire (MK) précédemment générée par ladite application de contrôle d'accès et au moins un droit d'accès (ACCESS) de l'utilisateur à une zone du site, chaque droit d'accès (ACCESS) comprenant au moins :
- une clé de chiffrement (BMK), la clé de chiffrement (BMK) ayant été générée par chiffrement de la première clé aléatoire (MK) avec la clé privée de chiffrement (PK),
- la clé partagée de chiffrement (SK),
- le numéro d'identification (IDA) du contrôleur d'accès associé à ladite zone et
- une date de fin de validité du droit d'accès, voire une date de début de validité du droit d'accès.

Le procédé de contrôle d'accès comprend les étapes suivantes :
a) par chaque contrôleur d'accès du site, l'émission répétée de son numéro d'identification (IDA), selon une norme de télécommunication permettant l'échange bidirectionnel de données à courte distance en utilisant des ondes radioélectriques entre le contrôleur d'accès et le dispositif de communication portable,
b) par le dispositif de communication portable, la réception d'un numéro d'identification (IDA) émis par un contrôleur d'accès situé à courte distance et la comparaison du numéro d'identification (IDA) reçu avec le numéro d'identification (IDA) compris dans chaque droit d'accès (ACCESS) stocké dans le dispositif de communication portable pour reconnaître, en cas de comparaison positive, le contrôleur d'accès ayant émis le numéro d'identification (IDA) reçu comme étant associé à une zone à laquelle l'utilisateur a un droit d'accès (ACCESS),
c) par le dispositif de communication portable, la génération et la transmission, au contrôleur d'accès reconnu, d'une deuxième clé aléatoire (K1),
d) par le contrôleur d'accès reconnu, la réception de la deuxième clé aléatoire (K1), puis la génération et la transmission, au dispositif de communication portable, d'une troisième clé aléatoire (K2),
e) par le dispositif de communication portable, la réception de la troisième clé aléatoire (K2), puis la génération et la transmission, au contrôleur d'accès reconnu, d'un message crypté (MSG) généré en fonction d'au moins :
   i. La deuxième clé aléatoire (K1),
   ii. La troisième clé aléatoire (K2),
   iii. La clé de chiffrement (BMK) à la zone associée au contrôleur d'accès reconnu,
   iv. la première clé aléatoire (MK),
   v. la date de fin de validité du droit d'accès, voire la date de début de validité du droit d'accès, et
   vi. La clé partagée de chiffrement (SK),
f) par le contrôleur d'accès reconnu, la réception et le décryptage du message crypté (MSG) en utilisant :
   i. La deuxième clé aléatoire (K1),
   ii. La troisième clé aléatoire (K2),
   iii. La clé de chiffrement (BMK),
   iv. La clé partagée de chiffrement (SK) du contrôleur d'accès reconnu, et
   v. La clé privée de chiffrement (PK), de sorte à en extraire au moins la date de fin de validité du droit d'accès, voire la date de début de validité du droit d'accès, et
g) en cas de vérification positive de la validité du droit d'accès, cette vérification étant fonction de l'instant auquel l'accès est sollicité relativement à la date de fin de validité du droit d'accès, voire à la date de début de validité du droit d'accès, la délivrance, par le contrôleur d'accès reconnu, d'une autorisation d'accès pour l'utilisateur à la zone associée au contrôleur d'accès reconnu.

Il apparaît donc que la mise en œuvre du procédé de contrôle d'accès selon le deuxième aspect de l'invention repose sur une communication à courte distance entre le dispositif de communication portable et le ou les contrôleurs d'accès situés à courte distance du dispositif de communication portable. La sécurisation de l'accès à la zone associée au contrôleur d'accès reconnu est atteinte y compris lorsque le dispositif de communication portable est en mode hors-ligne.

De manière facultative, le procédé de contrôle d'accès tel qu'introduit ci-dessus peut en outre présenter au moins l'une quelconque des caractéristiques suivantes qui peuvent être prises séparément ou en combinaison.

Selon un exemple, le décryptage du message crypté (MSG) est réalisé de sorte à en extraire la clé aléatoire (MK), puis à utiliser la clé aléatoire (MK) extraite pour décrypter une partie encore non décryptée du message (MSG) de sorte à en extraire au moins la date de fin de validité du droit d'accès, voire la date de début de validité du droit d'accès. Plus particulièrement, la clé aléatoire (MK) extraite peut être utilisée, par le contrôleur d'accès, pour générer la clé de chiffrement (BMK) par chiffrement de la première clé aléatoire (MK) avec la clé privée de chiffrement (PK). La clé de chiffrement (BMK) peut dès lors être utilisée pour déchiffrer la partie encore non décryptée du message (MSG).

Selon un autre exemple, la mise en œuvre du procédé de contrôle d'accès ne nécessite aucune communication avec un serveur informatique, et en particulier aucune communication entre un serveur informatique et un contrôleur d'accès.

Selon un autre exemple, chaque droit d'accès (ACCESS) comprenant en outre au moins l'un parmi un identifiant du site (SID) et un identifiant de l'utilisateur (UID), la génération par le dispositif de communication portable du message crypté (MSG) est en outre fonction de l'un au moins parmi l'identifiant du site (SID) et l'identifiant de l'utilisateur (UID), respectivement. Le décryptage du message crypté (MSG) peut être réalisé de sorte à en extraire en outre au moins l'un parmi un identifiant du site (SID) et un identifiant de l'utilisateur (UID).

Selon un autre exemple, le procédé de contrôle d'accès comprend en outre, avec le contrôleur d'accès stockant en outre l'identifiant du site (SID), la comparaison de l'identifiant du site (SID) tel que précédemment extrait à l'identifiant du site (SID) stocké dans le contrôleur d'accès, l'accès étant refusé en cas de comparaison négative.

Selon un autre exemple, chacune parmi la deuxième clé aléatoire (K1) et la troisième clé aléatoire (K2) présentent chacune une longueur égale ou supérieure à 64 bits.

Selon un autre exemple, l'identifiant de l'utilisateur (UID) tel qu'extrait est stocké dans le contrôleur d'accès, au moins si l'accès est autorisé.

Selon un exemple des premier et deuxième aspects de l'invention, la clé privée de chiffrement (PK) et/ou la clé partagée de chiffrement (SK) et/ou le numéro d'identification de chaque contrôleur d'accès (IDA) et/ou la première clé aléatoire (MK) présentent chacun une longueur égale ou supérieure à 128 bits.

Selon un autre exemple des premier et deuxième aspects de l'invention, le numéro d'identification de chaque contrôleur d'accès présente un format déterminé selon une norme de télécommunication permettant l'échange bidirectionnel de données à courte distance en utilisant des ondes radioélectriques entre chaque contrôleur d'accès et au moins un dispositif de communication portable.

Selon un autre exemple des premier et deuxième aspects de l'invention, ledit au moins un contrôleur d'accès est exempt de tout dispositif de communication à longue distance, typiquement supérieure à 100 m, de préférence supérieure à 40 m.

Selon un autre exemple des premier et deuxième aspects de l'invention, aucune donnée personnelle n'est transmise audit au moins un contrôleur d'accès.

Selon un autre exemple des premier et deuxième aspects de l'invention, la clé privée de chiffrement (PK) dudit au moins un contrôleur d'accès n'est pas transmise au dispositif de communication portable de l'utilisateur.

La présente invention porte également sur d'autres aspects dont trois produits programme d'ordinateur. Un premier de ces trois produits programme d'ordinateur comprend des instructions, qui lorsqu'elles sont effectuées par au moins un processeur d'un serveur informatique, exécute au moins les étapes du procédé d'initialisation tel qu'introduit ci-dessus. Un deuxième de ces trois produits programme d'ordinateur comprend des instructions, qui lorsqu'elles sont effectuées par au moins un processeur d'un contrôleur d'accès, exécute au moins les étapes a), d), f) et g) du procédé de contrôle d'accès tel qu'introduit ci-dessus. Un troisième de ces produits programme d'ordinateur comprend des instructions, qui lorsqu'elles sont effectuées par au moins un processeur d'un dispositif de communication portable, exécute au moins les étapes b), c) et e) du procédé de contrôle d'accès tel qu'introduit ci-dessus.

Un autre aspect de la présente invention concerne un système de contrôle d'accès comprenant un dispositif de communication portable et au moins un contrôleur d'accès, le système de contrôle d'accès étant configuré pour mettre en œuvre le procédé de contrôle d'accès tel qu'introduit ci-dessus.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un organigramme d'un mode de réalisation du procédé d'initialisation selon le premier aspect de l'invention.
La figure 2 représente un organigramme d'un mode de réalisation du procédé de contrôle d'accès selon le deuxième aspect de l'invention.
La figure 3 représente schématiquement un mode de réalisation du système de contrôle d'accès selon un des aspects de l'invention.

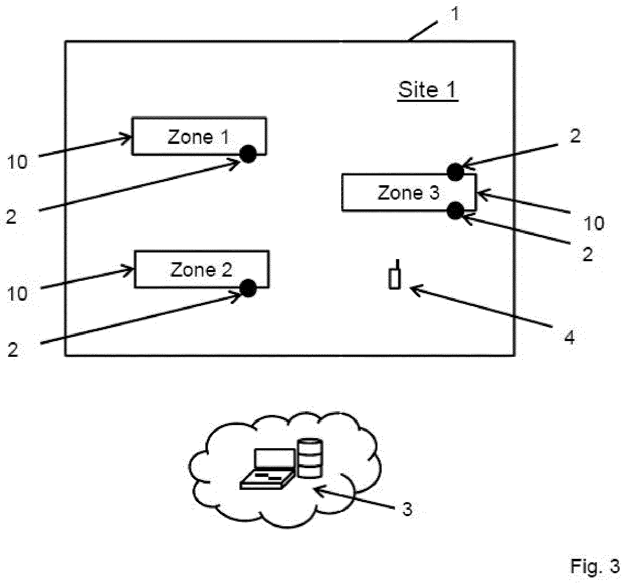

Les dessins sont donnés à titre d'exemples et ne sont pas limitatifs de l'invention. Ils sont destinés à faciliter la compréhension de l'invention. La figure 3 notamment constitue une représentation schématique qui n'est pas nécessairement à l'échelle des applications pratiques.

### DESCRIPTION DÉTAILLÉE

Des modes de réalisation des différents aspects de l'invention sont décrits ci-dessous en référence aux dessins annexés.

La figure 3 représente schématiquement un exemple d'architecture de système de communication dans lequel les procédés selon les premier et deuxième aspects de l'invention sont destinés à être mis en œuvre.

Il est essentiellement question, selon l'exemple illustré sur la figure 3, de sécuriser l'accès à au moins une zone 10, parmi les trois zones représentées, d'un site 1, par un utilisateur équipé d'un dispositif de communication portable 4, tel qu'un Smartphone. A cette fin, et à l'instar de procédés de contrôle d'accès connus, chaque zone comprend une entrée, telle qu'une porte ou une barrière, équipée d'un contrôleur d'accès 2. Chaque zone 10 peut être équipée d'une pluralité de contrôleurs d'accès 2 ; par exemple, la troisième zone illustrée est équipée de deux contrôleurs d'accès. Une zone 10 peut être une pièce du site visité par l'utilisateur, mais, en alternative, une zone 10 peut être un casier d'une consigne.

Comme cela apparaîtra à la lecture de la description qui suit, le contrôleur d'accès à une zone 10 du site 1 ne nécessite avantageusement pas, selon la présente invention, l'établissement d'une communication avec un serveur informatique 3 distant pour traiter une requête en accès à une zone 10 émise par un utilisateur ; le procédé de contrôle d'accès 200 selon le deuxième aspect de l'invention peut en effet être mis en œuvre de façon opérationnelle y compris lorsque le dispositif de communication portable 4 de l'utilisateur est dans un mode hors-ligne. Notons que la représentation du serveur informatique 3 dans un nuage traduit tout d'abord le fait que, durant la mise en œuvre du procédé de contrôle d'accès 200 selon le deuxième aspect de l'invention, ce serveur informatique 3 peut être hors de portée de communication que ce soit du dispositif de communication portable 4 ou des contrôleurs d'accès 2. En complément, la représentation graphique du serveur informatique 3 dans un nuage permet d'illustrer que le serveur informatique 3 peut avoir accès à des services informatiques (autres serveurs, stockage, mise en réseau, logiciels) via Internet à partir d'un fournisseur ; il fait donc partie d'un ensemble de matériels, de raccordements réseau et de logiciels fournissant des services qu'individus et collectivités peuvent exploiter depuis n'importe où dans le monde. En ce sens, le nuage représente l'informatique en nuage (ou «cloud computing» selon la terminologie anglo-saxonne) à laquelle appartient le serveur informatique 3.

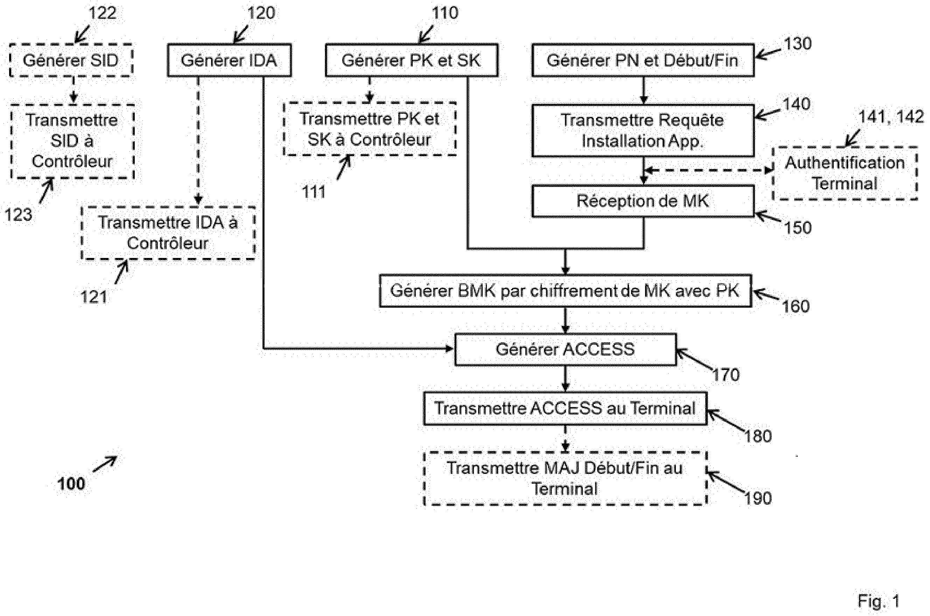

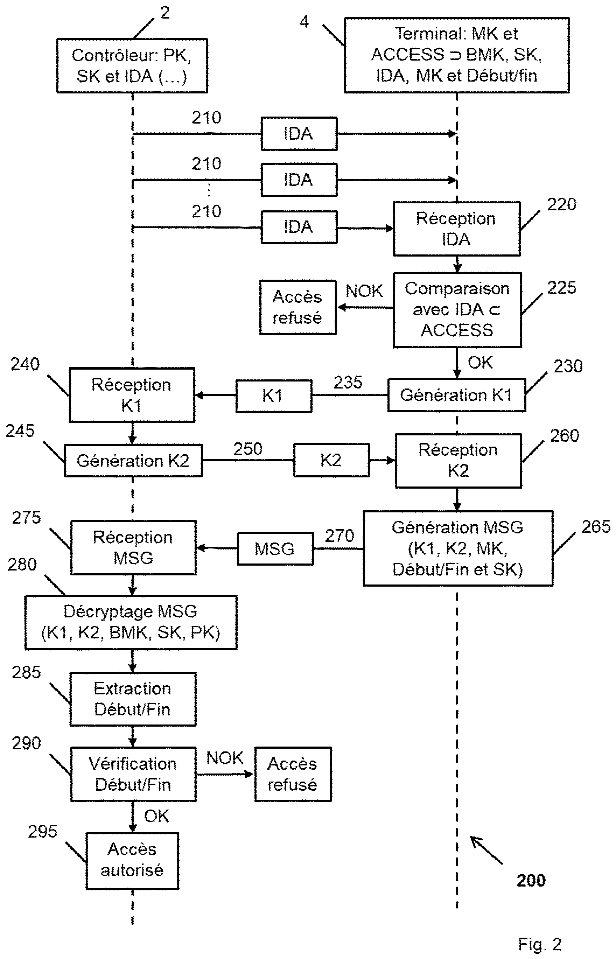

Notons par ailleurs que sur les figures 1 et 2, le dispositif de communication portable 4 est dénommé « Terminal ». Le dispositif de communication portable 4 est propre à implémenter au moins :
- une norme de télécommunication permettant l'échange bidirectionnel de données à courte distance en utilisant des ondes radioélectriques, tels que la norme connue sous l'acronyme BLE (pour «Bluelooth Low Energy» selon la terminologie anglo-saxonne), notamment avec chacun des contrôleurs d'accès 2 et
- une norme de télécommunication permettant l'échange bidirectionnel de données, le cas échéant à longue distance, notamment avec le serveur informatique 3.

La figure 1 représente un organigramme d'un mode de réalisation du procédé d'initialisation 100 selon le premier aspect de l'invention.

Le procédé d'initialisation 100 selon le mode de réalisation illustré sur la figure 1 est essentiellement concerné par l'initialisation du dispositif de communication portable 4 de l'utilisateur. Il est en outre, à titre accessoire, concerné par l'initialisation de chaque contrôleur d'accès 2. C'est pour traduire le caractère accessoire de l'initialisation de chaque contrôleur d'accès 2 que certaines des étapes du procédé initialisation 100 illustré sur la figure 1 sont encadrées par des traits en tirets longs.

Le procédé d'initialisation 100 selon le premier aspect de l'invention est essentiellement mis en œuvre par le serveur informatique 3 du fournisseur de services de sécurisation de l'accès aux zones 10 du site 1. Les différentes étapes du procédé d'initialisation 100 sont effectivement mises en œuvre par ledit serveur informatique 3.

Parmi ces différentes étapes, la génération 110 d'une clé privée de chiffrement (PK) et d'une clé partagée de chiffrement (SK) est donc réalisée par le serveur informatique 3. De préférence, la clé privée de chiffrement (PK) et la clé partagée de chiffrement (SK) forment une paire de clés de chiffrement symétrique. Par exemple, la clé privée de chiffrement (PK) et la clé partagée de chiffrement (SK) présentent une longueur égale ou supérieure à 128 bits.

L'on trouve également, parmi les différentes étapes du procédé d'initialisation 100 mises en oeuvre par le serveur informatique 3, la génération 120 d'un numéro d'identification unique (IDA) pour chacun des contrôleurs d'accès 2 d'un site 1.

Le procédé d'initialisation 100 selon le premier aspect de l'invention comprend en outre une étape d'enregistrement d'un nouvel utilisateur. Pour l'administrateur du serveur informatique 3, il s'agit ici de récupérer des données personnelles de l'utilisateur dont au moins des données d'établissement d'une communication (PN) avec le dispositif de communication portable 4 et d'ajouter une nouvelle entrée de type User dans la base de données du serveur informatique 3. L'étape d'enregistrement se traduit ainsi par le stockage 130, dans une base de données du serveur informatique 3, de données personnelles de l'utilisateur parmi lesquelles se trouvent lesdites données d'établissement d'une communication (PN) avec le dispositif de communication portable 4, telles qu'un numéro de téléphone, et le cas échéant, mais à titre non limitatif, d'autres données relatives à l'utilisateur, telles que son nom, ses données de facturation, son lieu de résidence, l'identité de son fournisseur de services de téléphonie, etc. De préférence, les données personnelles de l'utilisateur comprennent uniquement lesdites données d'établissement d'une communication (PN) avec le dispositif de communication portable 4.

De façon décorrélée, de l'étape d'enregistrement des données relatives à l'utilisateur, le procédé d'initialisation 100 selon le premier aspect de l'invention comprend par ailleurs le stockage 130 dans la base de données du serveur informatique 3 d'une date de fin de validité du droit d'accès, voire d'une date de début de validité du droit d'accès (Cf. «Début/Fin» sur la figure 1) ; l'essentiel étant qu'il soit possible de vérifier ultérieurement si, à l'instant où l'utilisateur sollicitera l'accès à une zone, sur la base d'un droit d'accès que lui aura communiqué le serveur informatique 3, ledit droit d'accès est valide ou non. La date de fin de validité du droit d'accès, voire la date de début de validité du droit d'accès, sont par exemple définis par l'administrateur du serveur informatique 3.

Comme déjà mentionné plus haut, le ou les droits d'accès dont dispose chaque utilisateur peuvent être mis à jour. Cette mise à jour peut être réalisée sur une base périodique ou suite à un événement, tel qu'une demande de renouvellement de droit d'accès par l'utilisateur. De même, les données utilisateur, dont notamment les données d'établissement d'une communication (PN), peuvent à tout moment être mises à jour, par exemple suite à une requête de l'utilisateur en ce sens.

De manière générale, mais de façon non limitative, toute communication entre le serveur informatique 3 et le dispositif de communication portable 4 de l'utilisateur, que cette communication soit relative à l'initialisation du procédé de contrôle d'accès 200 selon le deuxième aspect de l'invention ou relative à des mises à jour, est réalisée en mettant en œuvre au moins une technique de communication à longue portée, telle qu'une connexion Internet, par satellite ou GSM (pour «Global System for Mobile Communications» selon la terminologie anglo-saxonne). Il n'est donc pas nécessaire que l'utilisateur se déplace pour souscrire aux services d'accès sécurisé de son fournisseur ; l'étape d'enregistrement et le cas échéant les différentes étapes de mise à jour peuvent être avantageusement réalisées depuis l'endroit où se situe l'utilisateur, pour peu que, à cet endroit, une technique de communication à longue portée, supportée par le dispositif de communication portable 4 et le serveur informatique 3, soit disponible.

Toujours en référence à la figure 1, le procédé d'initialisation 100 selon le premier aspect de l'invention comprend en outre la transmission 140, par et depuis le serveur informatique 3, jusqu'au dispositif de communication portable 4 de l'utilisateur, d'une requête en installation d'une application logicielle dédiée à la mise en œuvre de certaines des étapes du procédé d'initialisation 100 selon le premier aspect de l'invention et des étapes du procédé de contrôle d'accès 200 selon le deuxième aspect de l'invention. Le cas échéant, l'installation de l'application logicielle dédiée sur le dispositif de communication portable 4 peut être précédée du téléchargement de ladite application logicielle sur le dispositif de communication portable 4.

Dans le cadre de la mise en œuvre du procédé d'initialisation 100 selon le premier aspect de l'invention, ladite application, une fois installée sur le dispositif de communication portable 4, est essentiellement configurée de sorte à générer et stocker, dans un support de mémorisation du dispositif de communication portable 4, une première aléatoire (MK). Par exemple, la première clé aléatoire (MK) présente une longueur égale ou supérieure à 128 bits.

Le procédé d'initialisation 100 selon le premier aspect de l'invention comprend alors une étape, réalisée par le serveur informatique 3, qui consiste à recevoir 150, depuis le dispositif de communication portable 4, la première clé aléatoire (MK) générée par ladite application. La transmission, depuis le dispositif de communication portable 4, de la première clé aléatoire (MK) au serveur informatique 3 peut être gérée par ladite application de façon transparente pour l'utilisateur.

Toutefois, préalablement à la réception 150 par le serveur informatique 3 de la première clé aléatoire (MK), voire préalablement à la transmission par le dispositif de communication portable 4 de la première clé aléatoire (MK), le procédé d'initialisation 100 selon le premier aspect de l'invention peut, à titre accessoire, comprendre une étape d'authentification du dispositif de communication portable 4. A cette fin, le procédé d'initialisation 100 comprend une étape consistant à transmettre 142, depuis le serveur informatique 3 jusqu'au dispositif de communication portable 4 de l'utilisateur, et en fonction desdites données d'établissement d'une communication (PN), un code d'authentification (PIN), tel qu'un code PIN (pour «Personal Identification Number» selon la terminologie anglo-saxonne) ou tout autre type de mot de passe. Par exemple, le code d'authentification (PIN) est à renseigner dans ladite application de contrôle d'accès, une fois celle-ci installée sur le dispositif de communication portable 4. De préférence, le code d'authentification (PIN) a, précédemment à l'étape de transmission 142, été généré 141 par le serveur informatique 3 lui-même.

Par exemple, ladite requête en installation est envoyée par le serveur informatique 3 au dispositif de communication portable 4 par un SMS (pour «Short Message Service» selon la terminologie anglo-saxonne), comprenant le cas échéant le code PIN. Le code PIN peut en outre être associé à une date limite de validité. Par exemple, le dispositif de communication portable 4 s'authentifie auprès du serveur informatique 3 en lui renvoyant un message comprenant le code PIN précédemment reçu. L'authentification peut n'être effective que si le code PIN est reçu par le serveur informatique 3 avant sa date limite de validité. Le SMS renvoyé par le dispositif de communication portable 4 au serveur informatique 3 peut également comprendre les données d'établissement d'une communication (PN) avec le dispositif de communication portable 4, pour automatiser avantageusement l'étape d'enregistrement de l'utilisateur relativement à une saisie manuelle par l'administrateur du serveur informatique 3 et/ou la première clé aléatoire (MK). Notons qu'à ce stade, et le serveur informatique 3 et le dispositif de communication portable 4 connaissent la première clé aléatoire (MK). Par contre, seul le serveur informatique 3 connaît la clé privée de chiffrement (PK) ; plus particulièrement, le dispositif de communication portable 4 ne connaît pas la clé privée de chiffrement (PK), et cela demeurera ainsi.

Une fois la première clé aléatoire (MK) réceptionnée 150 par le serveur informatique 3, le procédé d'initialisation 100 comprend une étape consistant à générer 160 une clé de chiffrement (BMK) par chiffrement de la première clé aléatoire (MK) avec la clé privée de chiffrement (PK). Dès lors, par un schéma de chiffrement symétrique classique, il est possible de déchiffrer la clé de chiffrement (BMK) en utilisant la clé privée de chiffrement (PK). Par exemple, la clé de chiffrement (BMK) est d'une longueur en bits égale à celle de la première clé aléatoire (MK).

Une fois la clé de chiffrement (BMK) générée 160, le procédé d'initialisation 100 comprend une étape consistant à générer 170 au moins un droit d'accès (ACCESS) de l'utilisateur à une zone du site, chaque droit d'accès (ACCESS) comprenant au moins :
- la clé de chiffrement (BMK),
- la clé partagée de chiffrement (SK),
- le numéro d'identification unique (IDA) de chaque contrôleur d'accès 2 associé à une zone 10 pour laquelle un droit d'accès (ACCESS) de l'utilisateur est à générer et
- la date de fin de validité du droit d'accès, voire la date de début de validité du droit d'accès.

Chaque droit d'accès (ACCESS) peut comprendre en outre au moins l'un parmi un identifiant du site (SID) et un identifiant de l'utilisateur (UID). De préférence, le format de l'identifiant de l'utilisateur (UID) et prédéfini par la norme de télécommunication, par exemple la norme associée à la technique BLE susmentionnée, utilisée pour permettre au dispositif de communication portable 4 et à chaque contrôleur d'accès 2 d'échanger des données entre eux.

On notera que chaque droit d'accès (ACCESS) est exempt de la clé privée de chiffrement (PK). En outre, chaque droit d'accès (ACCESS) peut avantageusement être exempt de la première clé aléatoire (MK) associée au dispositif de communication portable 4.

Une fois générés 170, le ou les droits d'accès (ACCESS) sont transmis 180 au dispositif de communication portable 4. Suite à la réception du ou des droits d'accès (ACCESS) par le dispositif de communication portable 4, l'application susmentionnée les sauvegardes dans le support de mémorisation du dispositif de communication portable 4, de préférence en mode sécurisé.

Comme déjà évoqué plus haut, suite à la transmission 180 du ou des droits d'accès (ACCESS) au dispositif de communication portable 4, le procédé d'initialisation 100 peut comprendre une étape consistant à transmettre 190, depuis le serveur informatique 3 au dispositif de communication portable 4, des données de mise à jour de la date de fin de validité du droit d'accès, voire de la date de début de validité du droit d'accès.

Comme déjà introduit plus haut, le procédé d'initialisation 100 comprend également, à titre accessoire, l'initialisation des différents contrôleurs d'accès 2. Cette initialisation fait intervenir les étapes qui, sur la figure 1, sont représentées par des traits et des cadres en tirets longs.

Cette initialisation comprend au moins la transmission 111 de la clé privée de chiffrement (PK) et de la clé partagée de chiffrement (SK) à chaque contrôleur d'accès 2 et la transmission 121 à chaque contrôleur d'accès 2, du numéro d'identification (IDA) précédemment généré 120 pour ledit contrôleur d'accès 2.

En complément, l'initialisation des différents contrôleurs d'accès 2 peut comprendre la transmission 123 à chaque contrôleur d'accès 2 d'un identifiant (SID) du site 1 sur lequel le contrôleur d'accès 2 est installé ou est de préférence destiné à être installé. Notons ici que l'identifiant du site (SID) peut également être transmis au dispositif de communication portable 4, par exemple en étant inclus dans chacun des droits d'accès générés 170. Notons également que l'identifiant du site (SID) peut avoir été défini et renseigné par l'administrateur du serveur informatique 3.

L'initialisation des différents contrôleurs d'accès 2 consiste donc essentiellement à transmettre un certain nombre d'informations auxdits contrôleur d'accès 2, de sorte qu'ils les connaissent et les conservent, notamment en les stockant dans un support de mémorisation. Plus particulièrement, lesdites informations sont de préférence intégrées directement dans le logiciel embarqué (ou «firmware» selon la terminologie anglo-saxonne) de chaque contrôleur d'accès 2. La transmission desdites informations à chaque contrôleur d'accès 2 peut être réalisée par un technicien du fournisseur de services, soit manuellement, soit, via le serveur informatique 3, en utilisant par exemple une technologie de communication respectant une norme de télécommunication permettant l'échange au moins unidirectionnel (du serveur informatique 3 vers le contrôleur d'accès 2) de données à courte distance en utilisant des ondes radioélectriques. L'initialisation de chaque contrôleur d'accès 2 ne nécessite pas a priori de mise à jour ; elle peut être réalisée une fois pour toutes, par exemple dans un local du fournisseur de services d'accès, et donc avant son installation sur le site 1 à sécuriser. On comprend ainsi que chaque contrôleur d'accès 2 ne nécessite pas de moyens de communication à longue portée, tels qu'une connexion Internet ou une connexion radiofréquence à longue portée (GPS, GSM, etc.), Propre à permettre une communication sur une distance typiquement supérieure à 100 m, voire supérieure à 40 m. Chaque contrôleur d'accès 2 peut ainsi être avantageusement exempt de tout autre moyen de communication que ceux nécessaires à une communication à courte portée avec le dispositif de communication portable 4, cette communication à courte portée étant détaillée plus bas. Il ressort de ce qui précède que chaque contrôleur d'accès 2 peut ainsi présenter un coût avantageusement limité.

Par mise en œuvre du procédé d'initialisation 100 tel qu'introduit ci-dessus, le dispositif de communication portable et, à titre accessoire, chaque contrôleur d'accès 2, ont été initialisés de sorte à permettre la mise en œuvre subséquente d'un mode de réalisation détaillé ci-dessous du procédé de contrôle d'accès 200 selon le deuxième aspect de l'invention.

Un mode de réalisation du procédé de contrôle d'accès 200 à une zone d'un site par un utilisateur selon le deuxième aspect de l'invention est décrit ci-dessous en référence à la figure 2. Comme déjà détaillé plus haut, le site 1 comprend au moins une zone 10 et chaque zone 10 du site 1 est associée à un contrôleur d'accès 2 à ladite zone 10.

L'utilisateur porte un dispositif de communication portable 4 sur lequel une application de contrôle d'accès dédiée à la mise en œuvre du procédé de contrôle d'accès 200 a été installée.

Chaque contrôleur d'accès 2 stocke au moins une clé privée de chiffrement (PK), une clé partagée de chiffrement (SK) et un numéro d'identification (IDA) du contrôleur d'accès 2. La clé privée de chiffrement (PK) et la clé partagée de chiffrement (SK) forment de préférence une paire de clés de chiffrement symétrique.

Le dispositif de communication portable 4 stocke, quant à lui, une première clé aléatoire (MK) précédemment générée par ladite application de contrôle d'accès et au moins un droit d'accès (ACCESS) de l'utilisateur à une zone 10 du site 1.

Chaque droit d'accès (ACCESS) comprend au moins :
- une clé de chiffrement (BMK), la clé de chiffrement (BMK) ayant été générée par chiffrement de la première clé aléatoire (MK) avec la clé privée de chiffrement (PK),
- la clé partagée de chiffrement (SK),
- le numéro d'identification (IDA) du contrôleur d'accès 2 associé à ladite zone 10, et
- une date de fin de validité du droit d'accès, voire une date de début de validité du droit d'accès (Cf. «Début/Fin» sur la figure 2).

Le procédé de contrôle d'accès 200 tel qu'illustré sur la figure 2 comprend les étapes suivantes. Par chaque contrôleur d'accès du site, l'émission répétée 210 de son numéro d'identification (IDA), selon une norme de télécommunication permettant l'échange bidirectionnel de données à courte distance en utilisant des ondes radioélectriques entre le contrôleur d'accès 2 et le dispositif de communication portable 4, par exemple la norme associée à la technique connue sous l'acronyme BLE.

Par le dispositif de communication portable, la réception 220 d'un numéro d'identification (IDA) émis par un contrôleur d'accès 2 situé à courte distance et la comparaison 225 du numéro d'identification (IDA) reçu avec le numéro d'identification (IDA) compris dans chaque droit d'accès (ACCESS) stocké dans le dispositif de communication portable 4. Afin de réceptionner 220 les numéros d'identification (IDA) émis par chaque contrôleur d'accès 2 situé à courte distance du dispositif de communication portable 4, il peut être nécessaire que l'application dédiée à la mise en œuvre du procédé de contrôle d'accès 200 selon le deuxième aspect de l'invention soit en veille ou lancée par l'utilisateur via l'interface de son dispositif de communication portable 4. On comprend ainsi que, lorsque ladite application est à l'arrêt, l'utilisateur peut passer à proximité de n'importe quelle zone 10 du site 1 sans que ses droits d'accès ne puissent être compromis ou piratés.

De la sorte le dispositif de communication portable 4 peut reconnaître, en cas de comparaison positive, le contrôleur d'accès 2 ayant émis le numéro d'identification (IDA) reçu comme étant associé à une zone 10 à laquelle l'utilisateur a un droit d'accès (ACCESS). En cas de comparaison négative, l'accès est refusé. La comparaison 225 participe ainsi à une augmentation du niveau de sécurisation de l'accès.

Par le dispositif de communication portable 4, la génération 230 et la transmission 235, au contrôleur d'accès 2 reconnu, d'une deuxième clé aléatoire (K1).

Par le contrôleur d'accès 2 reconnu, la réception 240 de la deuxième clé aléatoire (K1), puis la génération 245 et la transmission 250, au dispositif de communication portable 4, d'une troisième clé aléatoire (K2).

Chacune parmi la deuxième clé aléatoire (K1) et la troisième clé aléatoire (K2) présente une longueur égale ou supérieure à 64 bits. La deuxième clé aléatoire (K1) et la troisième clé aléatoire (K2) se présentent de préférence sous un format prédéterminé connu de chaque contrôleur d'accès 2 et du dispositif de communication portable 4.

Ces échanges de clés aléatoires (K1 et K2) constituent une sorte de défi entre contrôleur d'accès 2 reconnu et dispositif de communication portable 4 qui permet de justifier d'un premier niveau de sécurisation de l'accès à ladite zone 10.

Par le dispositif de communication portable 4, la réception 260 de la troisième clé aléatoire (K2), puis la génération 265 et la transmission 270, au contrôleur d'accès 2 reconnu, d'un message crypté (MSG). Le message crypté (MSG) est plus particulièrement crypté en fonction d'au moins :
- la deuxième clé aléatoire (K1),
- la troisième clé aléatoire (K2),
- la clé de chiffrement (BMK) à la zone 10 associée au contrôleur d'accès 2 reconnu,
- la première clé aléatoire (MK),
- la date de fin de validité du droit d'accès, voire la date de début de validité du droit d'accès et
- la clé partagée de chiffrement (SK).

Le chiffrement du message (MSG) peut plus particulièrement faire intervenir un premier chiffrement de la première clé aléatoire (MK) et un deuxième chiffrement de la date de fin de validité du droit d'accès, voire la date de début de validité du droit d'accès, le cas échéant ensemble avec d'autres données, choisies notamment parmi celles relatives à l'utilisateur.

Par le contrôleur d'accès 2 reconnu, la réception 275 et le décryptage 280 du message crypté (MSG) en utilisant :
- la deuxième clé aléatoire (K1),
- la troisième clé aléatoire (K2),
- la clé de chiffrement (BMK),
- la clé partagée de chiffrement (SK) du contrôleur d'accès 2 reconnu et
- la clé privée de chiffrement (PK).

Le décryptage 280 du message crypté (MSG) est plus particulièrement réalisée de sorte à en extraire au moins la date de fin de validité du droit d'accès, voire la date de début de validité du droit d'accès. La clé de chiffrement (BMK) peut le cas échéant devoir être générée par le contrôleur d'accès, avant d'être utilisé pour le décryptage 280 du message crypté (MSG), et plus particulièrement pour le décryptage 280 d'une partie encore non décryptée du message (MSG) ; nous revenons plus bas sur ce point.

En cas de vérification positive de la validité du droit d'accès, cette vérification 290 étant fonction de l'instant auquel l'accès est sollicité relativement à la date de fin de validité du droit d'accès, voire à la date de début de validité du droit d'accès, le procédé de contrôle d'accès 200 comprend la délivrance 295, par le contrôleur d'accès 2 reconnu, d'une autorisation d'accès pour l'utilisateur à la zone 10 associée au contrôleur d'accès 2 reconnu.

Il apparaît ainsi clairement que la mise en œuvre du procédé de contrôle d'accès 200 selon le deuxième aspect de l'invention repose potentiellement, et de préférence, uniquement sur une communication à courte distance entre le dispositif de communication portable 4 et le ou les contrôleurs d'accès 2 situés à courte distance du dispositif de communication portable 4. En particulier, la mise en œuvre du procédé de contrôle d'accès 200 selon le deuxième aspect de l'invention ne nécessite aucunement la communication du dispositif de communication portable 4 et/ou de l'un quelconque des contrôleurs d'accès 2 avec une centrale de contrôle d'accès, telle que le serveur informatique 3, que celle-ci soit ou non distante. La sécurisation de l'accès à la zone 10 associée au contrôleur d'accès 2 reconnu est potentiellement réalisée de façon entièrement automatique, mais surtout elle est atteinte y compris lorsque le dispositif de communication portable 4 est en mode hors-ligne, ce mode définissant ici l'incapacité dans laquelle se trouve le dispositif de communication portable 4 à communiquer en utilisant les technologies de communication à longue portée qu'il supporte. Notons ici que le dispositif de communication portable 4 est en mode hors-ligne sitôt que le dispositif de communication portable 4 est dans une zone dite blanche, au moins pour les technologies de communication à longue portée qu'il supporte. Par ailleurs, le dispositif de communication portable 4 peut être mis en mode hors-ligne par l'utilisateur lui-même. Une telle mise en mode hors-ligne du dispositif de communication portable 4 peut être requis dans certaines circonstances, par exemple sur un site sensible, notamment un site classé Seveso, ou à bord d'un avion. En outre, et nous y reviendrons ci-dessous, aucune utilisation d'une base de données utilisateurs distante n'est requis pour mettre en œuvre le procédé de contrôle d'accès 200 selon le deuxième aspect de l'invention. Le décryptage du message crypté (MSG) peut être réalisé de sorte à en extraire également la clé aléatoire (MK). Le décryptage du message crypté (MSG) peut être réalisé de sorte à en extraire en outre la clé privée de chiffrement (PK). De la sorte, la clé aléatoire (MK) extraite peut être utilisée pour décrypter une partie encore non décryptée du message (MSG). Le décryptage du message crypté (MSG) pour en extraire l'un au moins parmi également la clé aléatoire (MK) et la clé privée de chiffrement (PK) peut par exemple faire intervenir la deuxième clé aléatoire (K1) et la troisième clé aléatoire (K2). Plus particulièrement, ce deuxième niveau de déchiffrement peut alors être réalisé de sorte à extraire, de la partie encore non décryptée du message (MSG), au moins la date de fin de validité du droit d'accès, voire la date de début de validité du droit d'accès. Le double chiffrement du message crypté (MSG) participe à l'augmentation du niveau de sécurisation de l'accès. Plus particulièrement, la clé aléatoire (MK) extraite peut être utilisée, par le contrôleur d'accès, pour générer la clé de chiffrement (BMK) par chiffrement de la première clé aléatoire (MK) avec la clé privée de chiffrement (PK). La clé de chiffrement (BMK) peut dès lors être utilisée pour déchiffrer la partie encore non décryptée du message (MSG).

Lorsque chaque droit d'accès (ACCESS) comprend en outre au moins l'un parmi un identifiant du site (SID) et un identifiant de l'utilisateur (UID), la génération 265 par le dispositif de communication portable 4 du message crypté (MSG) peut en outre être fonction de l'un au moins de ces paramètres. Le décryptage 280 du message crypté (MSG) peut alors être réalisé également de sorte à en extraire au moins l'un parmi l'identifiant du site (SID) et l'identifiant de l'utilisateur (UID).

Lorsque le contrôleur d'accès 2 connaît l'identifiant du site (SID), le procédé de contrôle d'accès 200 peut comprendre en outre la comparaison de l'identifiant du site (SID) tel que précédemment extrait à l'identifiant du site (SID) stocké dans le contrôleur d'accès 2. L'accès est refusé en cas de comparaison négative participant ainsi à une augmentation du niveau de sécurisation de l'accès.

L'identifiant de l'utilisateur (UID) tel qu'extrait peut être stocké dans le contrôleur d'accès 2, au moins si l'accès est autorisé. En alternative, une trace de l'accès à la zone 10 peut être stockée dans le dispositif de communication portable 4 qui pourra faire remonter automatiquement, par exemple via l'application, les données correspondantes au serveur informatique 3, par exemple lorsque le dispositif de communication portable 4 sera situé en un endroit d'où il sera de nouveau capable de communiquer avec le serveur informatique 3. De la sorte, un suivi des différentes visites des différentes zones 10 par les différents utilisateurs peut être assuré au niveau du serveur informatique 3.

Notons qu'aucune donnée personnelle de l'utilisateur n'est transmise à un quelconque contrôleur d'accès 2, ni lors de la mise en œuvre du procédé d'initialisation 100 selon le premier aspect de l'invention, ni lors de la mise en œuvre du procédé de contrôle d'accès 200 selon le deuxième aspect de l'invention. Les seuls équipements impliqués dans ces procédés qui ont à connaître les données personnelles de l'utilisateur sont le dispositif de communication portable dudit utilisateur et le serveur informatique 3. Le risque de fuite ou de piratage des données personnelles de l'utilisateur est ainsi avantageusement circonscrit.

L'invention n'est pas limitée aux modes de réalisations précédemment décrits et s'étend à tous les modes de réalisation couverts par les revendications.

## Revendications

1. Procédé d'initialisation (100) d'un procédé de contrôle d'accès (200) à une zone (10) d'un site (1), le site comprenant au moins une zone et chaque zone étant associée à un contrôleur d'accès (2) à ladite zone, le procédé d'initialisation (100) comprenant les étapes suivantes mises en œuvre par un serveur informatique (3) :
a) générer (110), pour chaque contrôleur d'accès, une clé privée de chiffrement (PK) et une clé partagée de chiffrement (SK),
b) générer (120) un numéro d'identification unique (IDA) de chaque contrôleur d'accès,
c) stocker (130), dans une base de données du serveur informatique, des données personnelles d'un utilisateur dont au moins des données d'établissement d'une communication (PN), avec un dispositif de communication portable (4) de l'utilisateur et une date de fin de validité du droit d'accès,
d) transmettre (140), au dispositif de communication portable (4) de l'utilisateur en fonction desdites données d'établissement d'une communication (PN), une requête en installation, sur le dispositif de communication portable, d'une application de contrôle d'accès pour la mise en œuvre du procédé de contrôle d'accès (200) à une zone d'un site par un utilisateur,
e) ladite application de contrôle d'accès étant, une fois installée sur le dispositif de communication portable (4), configurée pour générer et stocker dans un support de mémorisation du dispositif de communication portable, une première clé aléatoire (MK), recevoir (150), depuis le dispositif de communication portable, au moins la première clé aléatoire (MK),
f) générer (160) une clé de chiffrement (BMK) par chiffrement de la première clé aléatoire (MK) avec la clé privée de chiffrement (PK),
g) générer (170) au moins un droit d'accès (ACCESS) de l'utilisateur à une zone du site, chaque droit d'accès (ACCESS) comprenant au moins :
i. la clé de chiffrement (BMK),
ii. la clé partagée de chiffrement (SK),
iii. le numéro d'identification unique (IDA) de chaque contrôleur d'accès associé à une zone pour laquelle un droit d'accès de l'utilisateur est à générer et
iv. la date de fin de validité du droit d'accès,
h) transmettre (180) ledit au moins un droit d'accès (ACCESS) au dispositif de communication portable (4),
i) transmettre (111), à chaque contrôleur d'accès (2), la clé privée de chiffrement (PK) et la clé partagée de chiffrement (SK) précédemment générées pour ledit contrôleur d'accès, et
j) transmettre (121), à chaque contrôleur d'accès (2), le numéro d'identification (IDA) précédemment généré pour ledit contrôleur d'accès.

2. Procédé d'initialisation (100) selon la revendication précédente, comprenant en outre, suite à la transmission (180) dudit au moins un droit d'accès (ACCESS) au dispositif de communication portable (4), la transmission (190), par le serveur informatique (3) au dispositif de communication portable, de données de mise à jour de la date de fin de validité du droit d'accès.

3. Procédé d'initialisation (100) selon l'une quelconque des revendications précédentes, comprenant en outre les étapes suivantes mises en œuvre par le serveur informatique (3) :
• stocker (122) un identifiant du site (SID) et
• transmettre (123), à chaque contrôleur d'accès (2), l'identifiant du site (SID).

4. Procédé d'initialisation (100) selon l'une quelconque des revendications précédentes, comprenant en outre l'étape suivante mise en œuvre par le serveur informatique (3) :
• générer (141), un code d'authentification (PIN) du dispositif de communication portable et
• transmettre (142), au dispositif de communication portable (4) de l'utilisateur en fonction desdites données d'établissement d'une communication (PN), le code d'authentification (PIN), ce dernier étant à renseigner dans ladite application de contrôle d'accès, une fois celle-ci installée sur le dispositif de communication portable, pour authentifier le dispositif de communication portable.

5. Procédé d'initialisation (100) selon la revendication précédente, dans lequel l'étape e) est implémentée après que le dispositif de communication portable (4) ait été authentifié.

6. Procédé d'initialisation (100) selon l'une quelconque des revendications précédentes, dans lequel chaque droit d'accès (ACCESS) comprend en outre au moins l'un parmi un identifiant du site (SID) et un identifiant de l'utilisateur (UID).

7. Procédé de contrôle d'accès (200) à une zone (10) d'un site (1) par un utilisateur, le site comprenant au moins une zone et chaque zone du site étant associée à un contrôleur d'accès (2) à ladite zone,
l'utilisateur portant un dispositif de communication portable (4) sur lequel une application de contrôle d'accès dédiée à la mise en œuvre du procédé de contrôle d'accès (200) a été installée,
chaque contrôleur d'accès (2) stockant au moins une clé privée de chiffrement (PK), une clé partagée de chiffrement (SK) et un numéro d'identification (IDA) du contrôleur d'accès,
le dispositif de communication portable (4) stockant une première clé aléatoire (MK) précédemment générée par ladite application de contrôle d'accès et au moins un droit d'accès (ACCESS) de l'utilisateur à une zone du site, chaque droit d'accès (ACCESS) comprenant au moins :
i. une clé de chiffrement (BMK), la clé de chiffrement (BMK) ayant été générée par chiffrement de la première clé aléatoire (MK) avec la clé privée de chiffrement (PK),
ii. la clé partagée de chiffrement (SK),
iii. le numéro d'identification (IDA) du contrôleur d'accès associé à ladite zone et
iv. une date de fin de validité du droit d'accès,
le procédé de contrôle d'accès (200) comprenant les étapes suivantes :
a) par chaque contrôleur d'accès (2) du site, l'émission répétée (210) de son numéro d'identification (IDA), selon une norme de télécommunication permettant l'échange bidirectionnel de données à courte distance en utilisant des ondes radioélectriques entre le contrôleur d'accès (2) et le dispositif de communication portable (4),
b) par le dispositif de communication portable (4), la réception (220) d'un numéro d'identification (IDA) émis par un contrôleur d'accès (2) situé à courte distance et la comparaison (225) du numéro d'identification (IDA) reçu avec le numéro d'identification (IDA) compris dans chaque droit d'accès (ACCESS) stocké dans le dispositif de communication portable pour reconnaître, en cas de comparaison positive, le contrôleur d'accès (2) ayant émis le numéro d'identification (IDA) reçu comme étant associé à une zone à laquelle l'utilisateur a un droit d'accès (ACCESS),
c) par le dispositif de communication portable (4), la génération (230) et la transmission (235), au contrôleur d'accès (2) reconnu, d'une deuxième clé aléatoire (K1),
d) par le contrôleur d'accès (2) reconnu, la réception (240) de la deuxième clé aléatoire (K1), puis la génération (245) et la transmission (250), au dispositif de communication portable (4), d'une troisième clé aléatoire (K2),
e) par le dispositif de communication portable (4), la réception (260) de la troisième clé aléatoire (K2), puis la génération (265) et la transmission (270), au contrôleur d'accès (2) reconnu, d'un message crypté (MSG) généré en fonction d'au moins :
i. la deuxième clé aléatoire (K1),
ii. la troisième clé aléatoire (K2),
iii. la clé de chiffrement (BMK) à la zone associée au contrôleur d'accès reconnu,
iv. la première clé aléatoire (MK),
v. la date de fin de validité du droit d'accès et
vi. la clé partagée de chiffrement (SK),
f) par le contrôleur d'accès (2) reconnu, la réception (275) et le décryptage (280) du message crypté (MSG) en utilisant :
i. la deuxième clé aléatoire (K1),
ii. la troisième clé aléatoire (K2),
iii. la clé de chiffrement (BMK),
iv. la clé partagée de chiffrement (SK) du contrôleur d'accès reconnu et
v. la clé privée de chiffrement (PK), de sorte à en extraire (285) au moins la date de fin de validité du droit d'accès et
g) en cas de vérification (290) positive de la validité du droit d'accès, cette vérification étant fonction de l'instant auquel l'accès est sollicité relativement à la date de fin de validité du droit d'accès, la délivrance (295), par le contrôleur d'accès (2) reconnu, d'une autorisation d'accès pour l'utilisateur à la zone associée au contrôleur d'accès reconnu.

8. Procédé de contrôle d'accès (200) selon la revendication précédente, dans lequel le décryptage (280) du message crypté (MSG) est réalisé de sorte à en extraire la clé aléatoire (MK), puis à utiliser la clé aléatoire (MK) extraite pour décrypter une partie encore non décryptée du message (MSG) de sorte à en extraire au moins la date de fin de validité du droit d'accès.

9. Procédé de contrôle d'accès (200) selon l'une quelconque des revendications 7 et 8, dans lequel, chaque droit d'accès (ACCESS) comprenant en outre au moins l'un parmi un identifiant du site (SID) et un identifiant de l'utilisateur (UID), la génération par le dispositif de communication portable (4) du message crypté (MSG) est en outre fonction de l'un au moins parmi l'identifiant du site (SID) et l'identifiant de l'utilisateur (UID), respectivement.

10. Procédé de contrôle d'accès (200) selon la revendication précédente, dans lequel le décryptage (280) du message crypté (MSG) est réalisé de sorte à en extraire en outre au moins l'un parmi un identifiant du site (SID) et un identifiant de l'utilisateur (UID).

11. Procédé de contrôle d'accès (200) selon la revendication précédente, comprenant en outre, avec le contrôleur d'accès stockant en outre l'identifiant du site (SID), la comparaison de l'identifiant du site (SID) tel que précédemment extrait à l'identifiant du site (SID) stocké dans le contrôleur d'accès, l'accès étant refusé en cas de comparaison négative.

12. Produit programme d'ordinateur comprenant des instructions, qui lorsqu'elles sont effectuées par au moins un processeur d'un serveur informatique (3), exécute au moins les étapes du procédé d'initialisation (100) selon l'une quelconque des revendications 1 à 6.

13. Produit programme d'ordinateur comprenant des instructions, qui lorsqu'elles sont effectuées par au moins un processeur d'un contrôleur d'accès (2), exécute au moins les étapes a), d), f) et g) du procédé de contrôle d'accès (200) selon l'une quelconque des revendications 7 à 11.

14. Produit programme d'ordinateur comprenant des instructions, qui lorsqu'elles sont effectuées par au moins un processeur d'un dispositif de communication portable (4), exécute au moins les étapes b), c) et e) du procédé de contrôle d'accès (200) selon l'une quelconque des revendications 7 à 11.

## Patentansprüche

1. Initialisierungsverfahren (100) eines Verfahrens zur Zugangskontrolle (200) zu einem Bereich (10) eines Standorts (1), wobei der Standort mindestens einen Bereich umfasst und jeder Bereich einem Zugangskontroller (2) zu dem Bereich zugeordnet ist, wobei das Initialisierungsverfahren (100) die folgenden Schritte umfasst, die von einem Computerserver (3) umgesetzt werden:
a) Erzeugen (110) eines privaten Verschlüsselungsschlüssels (PK) und eines gemeinsam genutzten Verschlüsselungsschlüssels (SK) für jeden Zugangskontroller,
b) Erzeugen (120) einer eindeutigen Identifikationsnummer (IDA) jedes Zugangskontrollers,
c) Speichern (130) in einer Datenbank des Computerservers personenbezogener Daten eines Benutzers, darunter mindestens Daten zum Aufbauen einer Kommunikation (PN), mit einer tragbaren Kommunikationsvorrichtung (4) des Benutzers und einem Gültigkeitsenddatum der Zugangsberechtigung,
d) Übertragen an die tragbare Kommunikationseinrichtung (4) des Benutzers in Abhängigkeit von den Daten zum Aufbauen einer Kommunikation (PN) einer Anfrage zur Installation einer Zugangskontrollanwendung zum Umsetzen des Zugangskontrollverfahrens (200) in einem Bereich eines Standorts durch einen Benutzer an die tragbare Kommunikationseinrichtung (140),
e) wobei die Zugangskontrollanwendung, sobald sie auf der tragbaren Kommunikationseinrichtung (4) installiert ist, konfiguriert ist, um in einem Speichermedium der tragbaren Kommunikationseinrichtung einen ersten zufälligen Schlüssel (MK) zu erzeugen und zu speichern, von der tragbaren Kommunikationseinrichtung mindestens den ersten zufälligen Schlüssel (MK) zu empfangen (150),
f) Erzeugen (160) eines Verschlüsselungsschlüssels (BMK) durch Verschlüsseln des ersten zufälligen Schlüssels (MK) mit dem privaten Verschlüsselungsschlüssel (PK),
g) Erzeugen (170) mindestens einer Zugangsberechtigung (ACCESS) des Benutzers zu einem Bereich des Standorts, wobei jede Zugangsberechtigung (ACCESS) mindestens Folgendes umfasst:
i. den Verschlüsselungsschlüssel (BMK),
ii. den gemeinsam genutzten Verschlüsselungsschlüssel (SK),
iii. die eindeutige Identifikationsnummer (IDA) jedes Zugangskontrollers, der einem Bereich zugeordnet ist, für den eine Zugangsberechtigung des Benutzers zu erzeugen ist, und
iv. das Gültigkeitsenddatum der Zugangsberechtigung,
h) Übertragen (180) der mindestens einen Zugangsberechtigung (ACCESS) an die tragbare Kommunikationseinrichtung (4),
i) Übertragen (111) an jeden Zugangskontroller (2) des zuvor für den Zugangskontroller erzeugten privaten Verschlüsselungsschlüssels (PK) und gemeinsam genutzten Verschlüsselungsschlüssels (SK), und
j) Übertragen (121) an jeden Zugangskontroller (2) der zuvor für den Zugangskontroller erzeugten Identifikationsnummer (IDA).

2. Initialisierungsverfahren (100) nach dem vorstehenden Anspruch, das weiter infolge der Übertragung (180) der mindestens einen Zugangsberechtigung (ACCESS) an die tragbare Kommunikationsvorrichtung (4), die Übertragung (190) von Daten zur Aktualisierung des Gültigkeitsenddatums der Zugangsberechtigung durch den Computerserver (3) an die tragbare Kommunikationseinrichtung umfasst.

3. Initialisierungsverfahren (100) nach einem der vorstehenden Ansprüche, das weiter die folgenden Schritte umfasst, die von dem Computerserver (3) umgesetzt werden:
• Speichern (122) einer Kennung des Standorts (SID) und
• Übertragen (123) der Kennung des Standorts (SID) an jeden Zugangskontrollers (2).

4. Initialisierungsverfahren (100) nach einem der vorstehenden Ansprüche, das weiter den folgenden Schritt umfasst, der von dem Computerserver (3) umgesetzt wird:
• Erzeugen (141), eines Authentifizierungscodes (PIN) der tragbaren Kommunikationsvorrichtung und
• Übertragen (142) des Authentifizierungscodes (PIN) an die tragbare Kommunikationsvorrichtung (4) des Benutzers in Abhängigkeit von den Daten zum Aufbauen einer Kommunikation (PN), wobei dieser letztere in die Zugangskontrollanwendung einzutragen ist, sobald diese in der tragbaren Kommunikationsvorrichtung installiert ist, um die tragbare Kommunikationsvorrichtung zu authentifizieren.

5. Initialisierungsverfahren (100) nach dem vorstehenden Anspruch, wobei der Schritt e) umgesetzt wird, nachdem die tragbare Kommunikationsvorrichtung (4) authentifiziert worden ist.

6. Initialisierungsverfahren (100) nach einem der vorstehenden Ansprüche, wobei jede Zugangsberechtigung (ACCESS) weiter mindestens eine von einer Kennung des Standorts (SID) und einer Benutzerkennung (UID) umfasst.

7. Verfahren zur Zugangskontrolle (200) zu einem Bereich (10) eines Standorts (1) durch einen Benutzer, wobei der Standort mindestens einen Bereich umfasst und jeder Bereich des Standorts einem Zugangskontroller (2) zu dem Bereich zugeordnet ist,
der Benutzer, der eine tragbare Kommunikationsvorrichtung (4) trägt, in der eine Zugangskontrollanwendung, die zur Durchführung des Verfahrens zur Zugangskontrolle (200) bestimmt ist, installiert worden ist,
jeder Zugangskontroller (2), der mindestens einen privaten Verschlüsselungsschlüssel (PK), einen gemeinsam genutzten Verschlüsselungsschlüssel (SK) und eine Identifikationsnummer (IDA) des Zugangskontrollers speichert,
die tragbare Kommunikationsvorrichtung (4), die einen ersten zufälligen Schlüssel (MK) speichert, der zuvor von der Zugangskontrollanwendung erzeugt worden ist, und mindestens eine Zugangsberechtigung (ACCESS) des Benutzers zu einem Bereich des Standorts, wobei jede Zugangsberechtigung (ACCESS) mindestens Folgendes umfasst:
i. einen Verschlüsselungsschlüssel (BMK), wobei der Verschlüsselungsschlüssel (BMK) durch Verschlüsselung des ersten zufälligen Schlüssels (MK) mit dem privaten Verschlüsselungsschlüssel (PK) erzeugt worden ist,
ii. den gemeinsam genutzten Verschlüsselungsschlüssel (SK),
iii. die Identifikationsnummer (IDA) des Zugangskontrollers, das dem Bereich zugeordnet ist, und
iv. ein Gültigkeitsenddatum der Zugangsberechtigung,
wobei das Verfahren zur Zugangskontrolle (200) die folgenden Schritte umfasst:
a) von jedem Zugangskontroller (2) des Standorts das wiederholte Senden (210) seiner Identifikationsnummer (IDA) gemäß einem Telekommunikationsstandard, der den bidirektionalen Datenaustausch über eine kurze Entfernung unter Verwendung von Funkwellen zwischen dem Zugangskontroller (2) und der tragbaren Kommunikationsvorrichtung (4) ermöglicht,
b) von der tragbaren Kommunikationsvorrichtung (4) das Empfangen (220) einer Identifikationsnummer (IDA), die von einem in kurzer Entfernung gelegenen Zugangskontroller (2) gesendet wird, und das Vergleichen (225) der empfangenen Identifikationsnummer (IDA) mit der in jeder in der tragbaren Kommunikationsvorrichtung gespeicherten Zugangsberechtigung (ACCESS) umfassten Identifikationsnummer (IDA), um im Falle eines positiven Vergleichs den Zugangskontroller (2), der die Identifikationsnummer (IDA) gesendet hat, als den einem Bereich zugeordneten zu erkennen, für den der Benutzer eine Zugangsberechtigung (ACCESS) aufweist,
c) von der tragbaren Kommunikationsvorrichtung (4), das Erzeugen (230) und das Übertragen (235) eines zweiten zufälligen Schlüssels (K1) an den erkannten Zugangskontroller (2),
d) von dem erkannten Zugangskontroller (2) das Empfangen (240) des zweiten zufälligen Schlüssels (K1), dann das Erzeugen (245) und Übertragen (250) an die tragbare Kommunikationsvorrichtung (4) eines dritten zufälligen Schlüssels (K2),
e) von der tragbaren Kommunikationsvorrichtung (4) das Empfangen (260) des dritten zufälligen Schlüssels (K2), dann das Erzeugen (265) und das Senden (270) an den erkannten Zugangskontroller (2) einer verschlüsselten Nachricht (MSG), die in Abhängigkeit erzeugt wird von mindestens:
i. dem zweiten zufälligen Schlüssel (K1),
ii. dem dritten zufälligen Schlüssel (K2),
iii. dem Verschlüsselungsschlüssel (BMK) in dem dem erkannten Zugangskontroller zugeordneten Bereich,
iv. dem ersten zufälligen Schlüssel (MK),
iv. dem Gültigkeitsenddatum der Zugangsberechtigung und
vi. dem gemeinsam genutzten Verschlüsselungsschlüssel (SK),
f) von dem erkannten Zugangskontroller (2) das Empfangen (275) und Entschlüsseln (280) der verschlüsselten Nachricht (MSG) unter Verwendung von:
i. dem zweiten zufälligen Schlüssel (K1),
ii. dem dritten zufälligen Schlüssel (K2),
iii. dem Verschlüsselungsschlüssel (BMK),
iv. dem gemeinsam genutzten Verschlüsselungsschlüssel (SK) des erkannten Zugangskontrollers und
v. dem privaten Verschlüsselungsschlüssel (PK), um daraus mindestens das Gültigkeitsenddatum der Zugangsberechtigung (285) zu extrahieren und
g) im Falle einer positiven Überprüfung (290) der Gültigkeit der Zugangsberechtigung, wobei diese Überprüfung von dem Zeitpunkt abhängt, zu dem der Zugang in Bezug auf das Gültigkeitsenddatum der Zugangsberechtigung beantragt wird, die Ausstellung (295) durch den erkannten Zugangskontroller (2) einer Zugangsberechtigung für den Benutzer zu dem dem erkannten Zugangskontroller zugeordneten Bereich.

8. Verfahren zur Zugangskontrolle (200) nach dem vorstehenden Anspruch, wobei das Entschlüsseln (280) der verschlüsselten Nachricht (MSG) durchgeführt wird, um daraus den zufälligen Schlüssel (MK) zu extrahieren, und danach den extrahierten zufälligen Schlüssel (MK) zu verwenden, um einen noch nicht entschlüsselten Teil der Nachricht (MSG) zu entschlüsseln, um daraus mindestens das Gültigkeitsenddatum der Zugangsberechtigung zu extrahieren.

9. Verfahren zur Zugangskontrolle (200) nach einem der Ansprüche 7 und 8, wobei jede Zugangsberechtigung (ACCESS) weiter mindestens eine von einer Kennung des Standorts (SID) und einer Benutzerkennung (UID) umfasst, wobei das Erzeugen der verschlüsselten Nachricht (MSG) durch die tragbare Kommunikationsvorrichtung (4) weiter von mindestens einer von der Kennung des Standorts (SID) und der Benutzerkennung (UID) abhängt.

10. Verfahren zur Zugangskontrolle (200) nach dem vorstehenden Anspruch, wobei das Entschlüsseln (280) der verschlüsselten Nachricht (MSG) ausgeführt ist, um daraus weiter mindestens eine von einer Kennung des Standorts (SID) und einer Benutzerkennung (UID) zu extrahieren.

11. Verfahren zur Zugangskontrolle (200) nach dem vorstehenden Anspruch, das weiter mit dem Zugangskontroller, der die Kennung des Standorts (SID) speichert, den Vergleich der Kennung des Standorts (SID), wie zuvor extrahiert, mit der im Zugangskontroller gespeicherten Kennung des Standorts (SID) umfasst, wobei der Zugang im Fall eines negativen Vergleichs verweigert wird.

12. Computerprogrammprodukt, das Anweisungen umfasst, die, wenn sie von mindestens einem Prozessor eines Computerservers (3) ausgeführt werden, mindestens die Schritte des Initialisierungsverfahrens (100) nach einem der Ansprüche 1 bis 6 ausführen.

13. Computerprogrammprodukt, das Anweisungen umfasst, die, wenn sie von mindestens einem Prozessor des Zugangskontrollers (2) ausgeführt werden, mindestens die Schritte a), d), f) und g) des Verfahrens zur Zugangskontrolle (200) nach einem der Ansprüche 7 bis 11 ausführen.

14. Computerprogrammprodukt, das Anweisungen umfasst, die, wenn sie von mindestens einem Prozessor einer tragbaren Kommunikationsvorrichtung (4) ausgeführt werden, mindestens die Schritte b), c) und e) des Verfahrens zur Zugangskontrolle (200) nach einem der Ansprüche 7 bis 11 ausführen.

## Claims

1. Method for initialising (100) a method for controlling access (200) to an area (10) of a site (1), the site comprising at least one area and each area being associated with a controller for accessing (2) said area, the initialisation method (100) comprising the following steps implemented by a computer server (3):
a) generating (110), for each access controller, an encryption private key (PK) and an encryption shared key (SK),
b) generating (120) a unique identification number (IDA) of each access controller,
c) storing (130), in a database of the computer server, personal data of a user including at least data for establishing a communication (PN), with a mobile communication device (4) of the user and a validity end date of the access right,
d) transmitting (140), to the mobile communication device (4) of the user depending on said communication establishment data (PN), a request for installing, on the mobile communication device, an access control application for the implementation of the method for controlling access (200) to an area of a site by a user,
e) said access control application being, once installed on the mobile communication device (4), configured to generate and store in a storage medium of the mobile communication device, a first random key (MK), receiving (150), from the mobile communication device, at least the first random key (MK),
f) generating (160) an encryption key (BMK) by encrypting the first random key (MK) with the encryption private key (PK),
g) generating (170) at least one access right (ACCESS) of the user to an area of the site, each access right (ACCESS) comprising at least:
i. the encryption key (BMK),
ii. the encryption shared key (SK),
iii. the unique identification number (IDA) of each access controller associated with an area for which an access right of the user is to be generated, and
iv. the validity end date of the access right,
h) transmitting (180) said at least one access right (ACCESS) to the mobile communication device (4),
i) transmitting (111), to each access controller (2), the encryption private key (PK) and the encryption shared key (SK) previously generated for said access controller, and
j) transmitting (121), to each access controller (2), the identification number (IDA) previously generated for said access controller.

2. Initialisation method (100) according to the preceding claim, further comprising, following the transmission (180) of said at least one access right (ACCESS) to the mobile communication device (4), transmitting (190), by the computer server (3) to the mobile communication device, data for updating the validity end date of the access right.

3. Initialisation method (100) according to any one of the preceding claims, further comprising the following steps implemented by the computer server (3):
• storing (122) an identifier of the site (SID), and
• transmitting (123), to each access controller (2), the identifier of the site (SID).

4. Initialisation method (100) according to any one of the preceding claims, further comprising the following step implemented by the computer server (3):
• generating (141) an authentication code (PIN) of the mobile communication device and
• transmitting (142), to the mobile communication device (4) of the user depending on said communication establishment data (PN), the authentication code (PIN), the latter being to be entered into said access control application, once the latter is installed on the mobile communication device, to authenticate the mobile communication device.

5. Initialisation method (100) according to the preceding claim, wherein step e) is implemented after the mobile communication device (4) has been authenticated.

6. Initialisation method (100) according to any one of the preceding claims, wherein each access right (ACCESS) further comprises at least one amongst an identifier of the site (SID) and an identifier of the user (UID).

7. Method for controlling access (200) to an area (10) of a site (1) by a user, the site comprising at least one area and each area of the site being associated with a controller of access (2) to said area,
the user carrying a mobile communication device (4) on which an access control application dedicated to the implementation of the access control method (200) has been installed,
each access controller (2) storing at least one encryption private key (PK), an encryption shared key (SK) and an identification number (IDA) of the access controller,
the mobile communication device (4) storing a first random key (MK) previously generated by said access control application and at least one access right (ACCESS) of the user to an area of the site, each access right (ACCESS) comprising at least:
i. one encryption key (BMK), the encryption key (BMK) having been generated by encrypting the first random key (MK) with the encryption private key (PK),
ii. the encryption shared key (SK),
iii. the identification number (IDA) of the access controller associated with said area, and
iv. a validity end date of the access right,
the access control method (200) comprising the following steps:
a) by each access controller (2) of the site, repeatedly emitting (210) its identification number (IDA), according to a telecommunication standard enabling the short-distance bidirectional exchange of data using radiofrequency waves between the access controller (2) and the mobile communication device (4),
b) by the mobile communication device (4), receiving (220) an identification number (IDA) emitted by an access controller (2) located at a short range and comparing (225) the received identification number (IDA) with the identification number (IDA) comprised in each access right (ACCESS) stored in the mobile communication device to recognise, in case of a positive comparison, the access controller (2) having emitted the received identification number (IDA) as being associated with an area to which the user has an access right (ACCESS),
c) by the mobile communication device (4), generating (230) and transmitting (235), to the recognised access controller (2), a second random key (K1),
d) by the recognised access controller (2), receiving (240) the second random key (K1), then generating (245) and transmitting (250), to the mobile communication device (4), a third random key (K2),
e) by the mobile communication device (4), receiving (260) the third random key (K2), then generating (265) and transmitting (270), to the recognised access controller (2), an encrypted message (MSG) generated depending on at least:
i. the second random key (K1),
ii. the third random key (K2),
iii. the encryption key (BMK) at the area associated with the recognised access controller,
iv. the first random key (MK),
v. the validity end date of the access right, and
vi. the encryption shared key (SK),
f) by the recognised access controller (2), receiving (275) and decrypting (280) the encrypted message (MSG) using:
i. the second random key (K1),
ii. the third random key (K2),
iii. the encryption key (BMK),
iv. the encryption shared key (SK) of the recognised access controller, and
v. the encryption private key (PK), so as to extract (285) therefrom at least the validity end date of the access right, and
g) in case of a positive verification (290) of the validity of the access right, this verification depending on the time point at which access is requested relative to the validity end date of the access right, issuing (295), by the recognised access controller (2), an access authorisation for the user to the area associated with the recognised access controller.

8. Access control method (200) according to the preceding claim, wherein decrypting (280) the encrypted message (MSG) is carried out so as to extract therefrom the random key (MK), then using the extracted random key (MK) to decrypt a still undecrypted portion of the message (MSG) so as to extract therefrom at least the validity end date of the access right.

9. Access control method (200) according to any one of claims 7 and 8, wherein, each access right (ACCESS) further comprising at least one amongst an identifier of the site (SID) and an identifier of the user (UID), generating by the mobile communication device (4) the encrypted message (MSG) is further dependent on at least one amongst the identifier of the site (SID) and the identifier of the user (UID), respectively.

10. Access control method (200) according to the preceding claim, wherein decrypting (280) the encrypted message (MSG) is carried out so as to further extract at least one amongst an identifier of the site (SID) and an identifier of the user (UID).

11. Access control method (200) according to the preceding claim, further comprising, with the access controller further storing the identifier of the site (SID), comparing the identifier of the site (SID) as previously extracted with the identifier of the site (SID) stored in the access controller, access being denied in case of a negative comparison.

12. Computer program product comprising instructions, which when they are performed by at least one processor of a computer server (3), executes at least the steps of the initialisation method (100) according to any one of claims 1 to 6.

13. Computer program product comprising instructions, which when they are performed by at least one processor of an access controller (2), executes at least steps a), d), f) and g) of the access control method (200) according to any one of claims 7 to 11.

14. Computer program product comprising instructions, which when they are performed by at least one processor of a mobile communication device (4), executes at least steps b), c) and e) of the access control method (200) according to any one of claims 7 to 11.
